# EUROPEAN PATENT APPLICATION

(11) **EP 4 626 117 A1**
(43) Date of publication of application: **01.10.2025**
(21) Application number: 24757162.3
(22) Date of filing: 13.02.2024
(51) Int. Cl.: H04W 72/231, H04L 5/00

(54) **METHOD AND DEVICE FOR ACTIVATING/DEACTIVATING TCI IN MTRP SYSTEM**

(30) Priority: 15.02.2023 KR 20230020303
(71) Applicant: Hyundai Motor Company, Seoul 06797 (KR); Kia Corporation, Seoul 06797 (KR)
(72) Inventor: LEE, Jeong Su, Hwaseong-si, Gyeonggi-do 18280 (KR)
(74) Representative: Isarpatent
(86) International application number: PCT/KR2024/001978
(87) International publication number: WO 2024/172433

(57) **Abstract**

Disclosed are a method and device for activating/deactivating a TCI in an mTRP system. The method performed by a LTE comprises the steps of: receiving, from a base station, a TCI state activation/deactivation MAC CE indicating activation or deactivation of a TCI state; identifying one or more TRPs indicated by a TRP indicator field included in the TCI state activation/deactivation MAC CE; identifying one or more TCI state IDs associated with the one or more TRPs on the basis of the TCI state ID fields included in the TCI state activation/deactivation MAC CE; and activating or deactivating one or more TCI states having the one or more TCI state IDs.

## Description

### [Technical Field]

The present disclosure relates to an enhanced communication technique, and more particularly, to a technique for transmission configuration indicator (TCI) activation and/or deactivation in a multi-transmission and reception point (mTRP) system.

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, multiple transmission and reception points (mTRPs) may be deployed in a communication network (e.g., 5G communication network and/or 6G communication network). The mTRPs may be geographically separated. A base station may communicate with a terminal using the mTRPs. The mTRP techniques may be used to address issues such as the degradation of quality of service (QoS) for cell-edge terminals and/or inter-cell interference. In environments where non-line-of-sight (NLOS) paths are limited, the mTRP techniques may be used to provide additional communication paths.

Communication based on mTRP may be performed based on a coherent joint transmission (CJT) scheme or a non-CJT (NCJT) scheme. In the CJT scheme, the mTRPs may perform cooperative communication based on a reliable backhaul link, and the mTRPs may provide synchronized communication services to the terminal. In the NCJT scheme, the mTRPs may provide communication services to the terminal without cooperation. For example, in the NCJT scheme, the mTRPs may perform operations such as scheduling, selection of a precoding matrix, and determination of a modulation and coding scheme (MCS) independently.

In a communication network, the base station may configure a transmission configuration indicator (TCI) state for a single TRP (sTRP), but a method for configuring TCI states for mTRPs is not yet defined. Therefore, a method for configuring TCI states for mTRPs may be required, and a method for activating and/or deactivating the TCI states may also be required.

### [Disclosure]

### [Technical Problem]

The present disclosure is directed to providing a method and an apparatus for activating and/or deactivating TCI states in an mTRP system.

### [Technical Solution]

A method of a user equipment (UE), according to exemplary embodiments of the present disclosure for achieving the above-described objective, may comprise: receiving a transmission configuration indicator (TCI) state activation/deactivation medium access control (MAC) control element (CE) from a base station, the TCI state activation/deactivation MAC CE indicating activation or deactivation of TCI state(s); identifying one or more transmission and reception points (TRPs) indicated by a TRP indication field included in the TCI state activation/deactivation MAC CE; identifying one or more TCI state indexes (IDs) associated with the one or more TRPs, based on TCI state ID fields included in the TCI state activation/deactivation MAC CE; and activating or deactivating one or more TCI states having the one or more TCI state IDs.

The TCI state activation/deactivation MAC CE may further include a serving cell identifier (ID) field, and the one or more TRPs may be associated with a serving cell indicated by the serving cell ID.

A size of the TRP indication field may vary depending on a number of the one or more TRPs associated with the serving cell, and when the number of the one or more TRPs is M, the size of the TRP indication field may be M bits or log₂ M bits, and M may be a natural number.

The method may further comprise: receiving information indicating a TCI state type of the serving cell from the base station, wherein the TCI state type may be indicated as a joint TCI state type or a separate TCI state type, and the TCI state type of the serving cell may be applied to the one or more TRPs associated with the serving cell.

The method may further comprise: receiving information indicating a TCI state type of the serving cell from the base station; and receiving information indicating TCI state types of a plurality of TRPs from the base station, wherein the TCI state types of the plurality of TRPs may be configured independently from the TCI state type of the serving cell, and the one or more TRPs may belong to the plurality of TRPs.

The method may further comprise: receiving one or more simultaneous unified (U)-TCI-TRP-update lists from the base station, wherein activation or deactivation of TCI states for TRPs belonging to each of the one or more simultaneous U-TCI-TRP-update lists may be performed simultaneously.

The method may further comprise: in response to the one or more simultaneous U-TCI-TRP-update lists being configured by the base station, identifying simultaneous U-TCI-TRP-update list(s) to which the one or more TRPs belong among the one or more simultaneous U-TCI-TRP-update lists; identifying all TRPs belonging to the identified simultaneous U-TCI-TRP-update list(s); and activating or deactivating TCI states for remaining TRPs among all the identified TRPs, excluding the one or more TRPs.

When the one or more TRPs include a first TRP and a second TRP, the TCI state activation/deactivation MAC CE may include a downlink (DL) bandwidth part (BWP) 1 field indicating a first DL BWP for the first TRP, an uplink (UL) BWP 1 field indicating a first UL BWP for the first TRP, a DL BWP 2 field indicating a second DL BWP for the second TRP, and a UL BWP 2 field indicating a second UL BWP for the second TRP.

When the one or more TRPs include a first TRP and a second TRP, the TCI state activation/deactivation MAC CE may include a DL BWP field indicating a DL BWP for the first TRP and the second TRP, and a UL BWP field indicating a UL BWP for the first TRP and the second TRP.

A method of a base station, according to exemplary embodiments of the present disclosure for achieving the above-described objective, may comprise: generating a transmission configuration indicator (TCI) state activation/deactivation medium access control (MAC) control element (CE) including a TRP indication field indicating one or more transmission and reception points (TRPs) and one or more TCI state index (ID) fields associated with the one or more TRPs; and transmitting the TCI state activation/deactivation MAC CE to a user equipment (UE), wherein the TCI state activation/deactivation MAC CE indicates activation or deactivation of one or more TCI states associated with the one or more TRPs.

The TCI state activation/deactivation MAC CE may further include a serving cell identifier (ID) field, and the one or more TRPs may be associated with a serving cell indicated by the serving cell ID.

A size of the TRP indication field may vary depending on a number of the one or more TRPs associated with the serving cell, and when the number of the one or more TRPs is M, the size of the TRP indication field may be M bits or log₂ M bits, and M may be a natural number.

The method may further comprise: transmitting information indicating a TCI state type of the serving cell to the UE, wherein the TCI state type may be indicated as a joint TCI state type or a separate TCI state type, and the TCI state type of the serving cell may be applied to the one or more TRPs associated with the serving cell.

The method may further comprise: transmitting information indicating a TCI state type of the serving cell to the UE; and transmitting information indicating TCI state types of a plurality of TRPs to the UE, wherein the TCI state types of the plurality of TRPs may be configured independently from the TCI state type of the serving cell, and the one or more TRPs may belong to the plurality of TRPs.

The method may further comprise: transmitting one or more simultaneous unified (U)-TCI-TRP-update lists to the UE, wherein activation or deactivation of TCI states for TRPs belonging to each of the one or more simultaneous U-TCI-TRP-update lists may be performed simultaneously.

When the one or more TRPs include a first TRP and a second TRP, the TCI state activation/deactivation MAC CE may include a downlink (DL) bandwidth part (BWP) 1 field indicating a first DL BWP for the first TRP, an uplink (UL) BWP 1 field indicating a first UL BWP for the first TRP, a DL BWP 2 field indicating a second DL BWP for the second TRP, and a UL BWP 2 field indicating a second UL BWP for the second TRP.

When the one or more TRPs include a first TRP and a second TRP, the TCI state activation/deactivation MAC CE may include a DL BWP field indicating a DL BWP for the first TRP and the second TRP, and a UL BWP field indicating a UL BWP for the first TRP and the second TRP.

A user equipment (UE), according to exemplary embodiments of the present disclosure for achieving the above-described objective, may comprise: at least one processor, wherein the at least one processor may cause the UE to perform: receiving a transmission configuration indicator (TCI) state activation/deactivation medium access control (MAC) control element (CE) from a base station, the TCI state activation/deactivation MAC CE indicating activation or deactivation of TCI state(s); identifying one or more transmission and reception points (TRPs) indicated by a TRP indication field included in the TCI state activation/deactivation MAC CE; identifying one or more TCI state indexes (IDs) associated with the one or more TRPs, based on TCI state ID fields included in the TCI state activation/deactivation MAC CE; and activating or deactivating one or more TCI states having the one or more TCI state IDs.

The at least one processor may further cause the UE to perform: receiving information indicating a TCI state type of the serving cell from the base station, wherein the TCI state type may be indicated as a joint TCI state type or a separate TCI state type, the TCI state type of the serving cell may be applied to the one or more TRPs associated with the serving cell, and the serving cell may be indicated by a serving cell identifier (ID) field included in the TCI state activation/deactivation MAC CE.

The at least one processor may further cause the UE to perform: receiving one or more simultaneous unified (U)-TCI-TRP-update lists from the base station, wherein activation or deactivation of TCI states for TRPs belonging to each of the one or more simultaneous U-TCI-TRP-update lists may be performed simultaneously.

### [Advantageous Effects]

According to the present disclosure, a base station can transmit a TCI state activation/deactivation MAC CE to a terminal, the TCI state activation/deactivation MAC CE indicating activation or deactivation of one or more TCI states for one or more TRPs. The terminal can receive the TCI state activation/deactivation MAC CE from the base station and can activate or deactivate the one or more TCI states for the one or more TRPs based on information included in the TCI state activation/deactivation MAC CE. According to the above-described operations, activation or deactivation of TCI states for TRPs in an mTRP system can be efficiently performed. Therefore, the performance of the communication system can be improved.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a block diagram illustrating a first exemplary embodiment of communication nodes performing communication.
FIG. 4A is a block diagram illustrating a first exemplary embodiment of a transmission path.
FIG. 4B is a block diagram illustrating a first exemplary embodiment of a reception path.
FIG. 5 is a conceptual diagram illustrating a first exemplary embodiment of a system frame in a communication system.
FIG. 6 is a conceptual diagram illustrating a first exemplary embodiment of a subframe in a communication system.
FIG. 7 is a conceptual diagram illustrating a first exemplary embodiment of a slot in a communication system.
FIG. 8 is a conceptual diagram illustrating a first exemplary embodiment of a time-frequency resource in a communication system.
FIG. 9 is a conceptual diagram illustrating a first exemplary embodiment of a method of configuring a unified TCI state pool in an sTRP system.
FIG. 10 is a conceptual diagram illustrating a first exemplary embodiment of a TCI state activation/deactivation MAC CE.
FIG. 11A is a conceptual diagram illustrating a first exemplary embodiment of a method of configuring TCI state types in an mTRP system.
FIG. 11B is a conceptual diagram illustrating a second exemplary embodiment of a method of configuring TCI state types in an mTRP system.
FIG. 12 is a conceptual diagram illustrating a second exemplary embodiment of a TCI state activation/deactivation MAC CE.
FIG. 13A is a conceptual diagram illustrating a third exemplary embodiment of a TCI state activation/deactivation MAC CE.
FIG. 13B is a conceptual diagram illustrating a fourth exemplary embodiment of a TCI state activation/deactivation MAC CE.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

**In the** present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. **In** contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. **In** the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. **In** this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

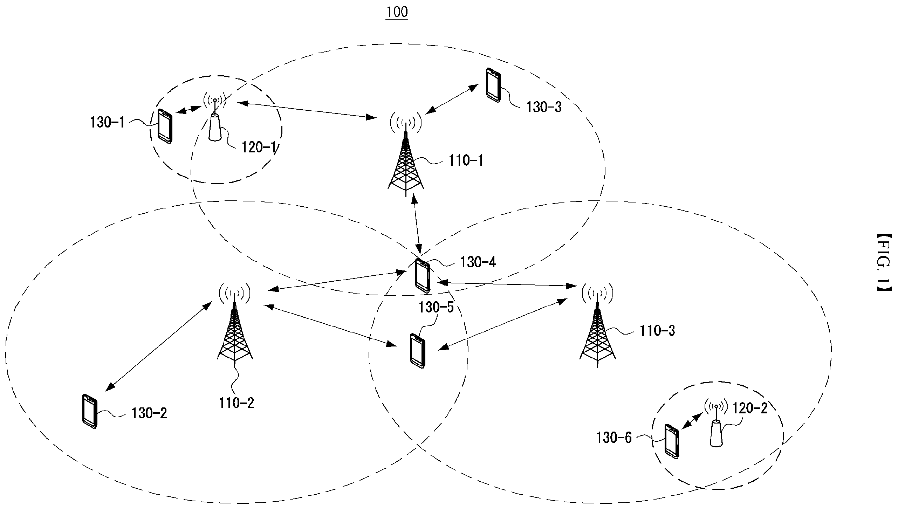

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME). When the communication system 100 is a 5G communication (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

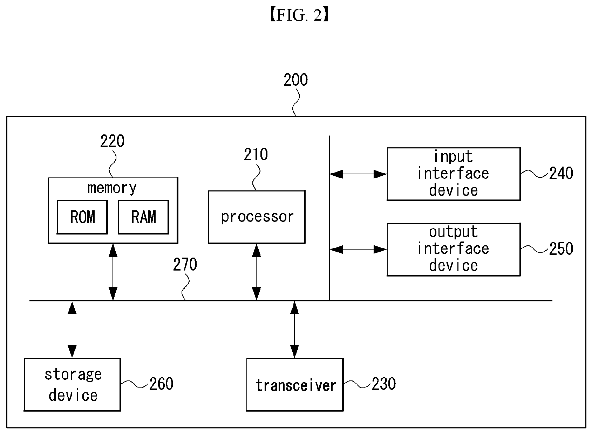

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a nonvolatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

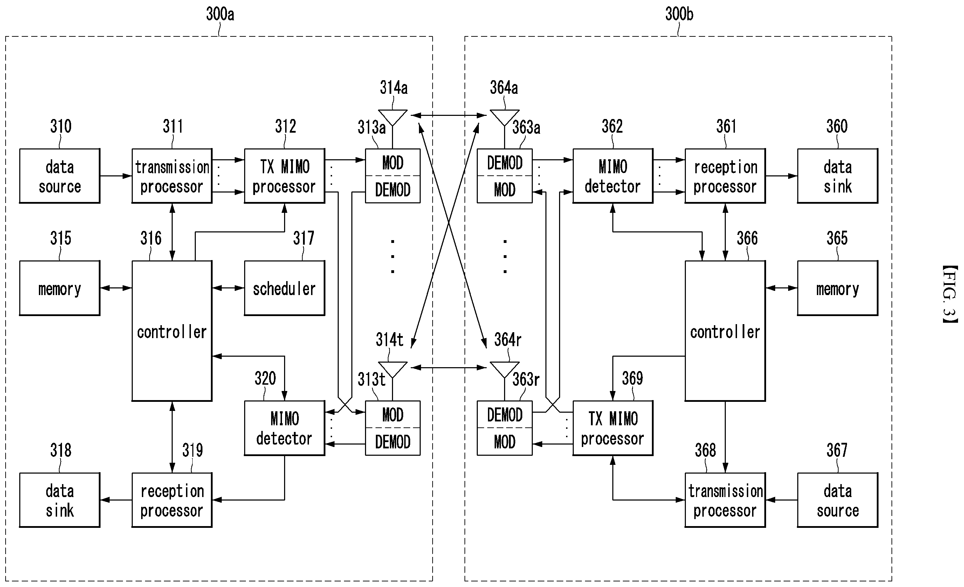

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

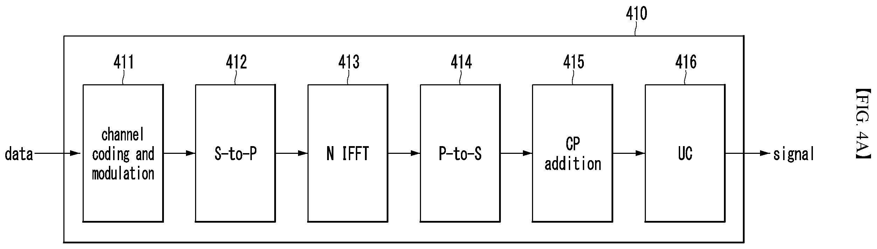

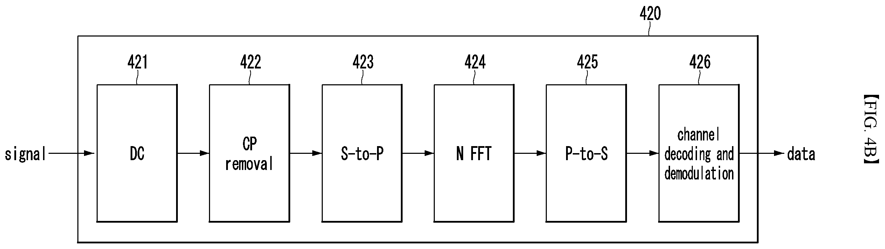

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

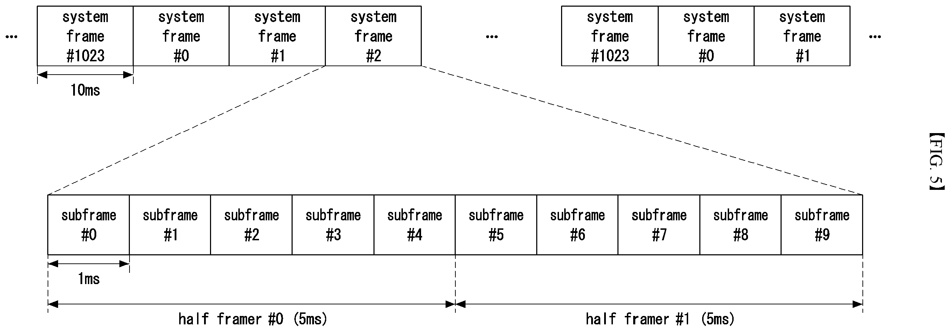

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

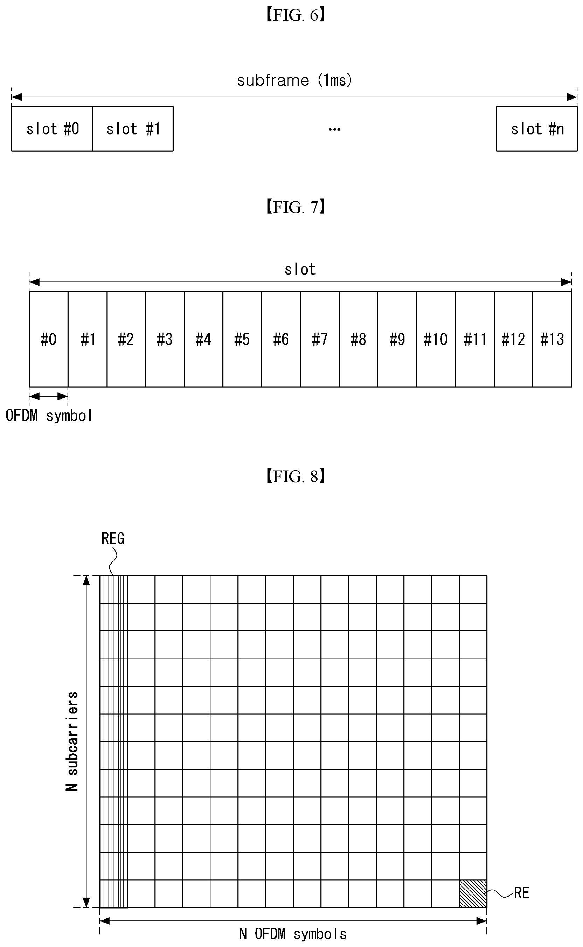

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., µ = 0), the length of slot may be 1 ms. In this case, one system frame may include 10 slots. When a subcarrier spacing is 30 kHz (e.g., µ = 1), the length of slot may be 0.5 ms. In this case, one system frame may include 20 slots.

When a subcarrier spacing is 60 kHz (e.g., µ = 2), the length of slot may be 0.25 ms. In this case, one system frame may include 40 slots. When a subcarrier spacing is 120 kHz (e.g., µ = 3), the length of slot may be 0.125 ms. In this case, one system frame may include 80 slots. When a subcarrier spacing is 240 kHz (e.g., µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) of the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, a communication system (e.g., communication network) may support transmission and reception point (TRP)-based techniques (e.g., multiple TRP (mTRP) techniques and/or single TRP (sTRP) techniques). The communication system supporting TRP techniques may be referred to as a TRP system (e.g., mTRP system and/or sTRP system). In the present disclosure, 'TRP' may have a meaning including 'sTRP' and/or 'mTRP', and 'TRP' may refer to an sTRP or mTRPs depending on a context. A TRP may refer to an antenna set, an antenna group, and/or an antenna array. A TRP may be associated with a CORESET and/or a beam (e.g., beam group).

A beam management procedure for the TRP may be supported. The beam management procedure for the TRP may be defined as a set of layer 1 (L1)/layer 2 (L2) procedures for discovering and/or maintaining an optimal beam required for communication between the TRP and a terminal. The beam management procedure for the TRP may be classified into four detailed procedures. For example, the beam management procedure for the TRP may include a beam determination procedure, a beam measurement procedure, a beam reporting procedure, and a beam sweeping procedure.

By utilizing a reciprocity property of channels (e.g., DL/UL channel) between the TRP and the terminal, the terminal may configure a Tx beam based on measurement value(s) of Rx beam(s) of the DL channel, and may configure an Rx beam based on measurement value(s) of Tx beam(s) of the UL channel. In the present disclosure, 'DL/UL channel' may refer to a DL channel and/or a UL channel. The base station may configure a Tx beam based on measurement value(s) of Rx beam(s) of the UL channel and may configure an Rx beam based on measurement value(s) of Tx beam(s) of the DL channel.

In relation to beam management associated with analog beamforming, a transmission configuration indicator (TCI) may be introduced to configure a reception beam of the terminal for a specific channel/signal (e.g., PDSCH, CSI-RS, PDCCH, etc.). The base station may dynamically indicate quasi-co-location (QCL) information to the terminal using a TCI. To reduce signaling overhead for QCL configuration of a DL/UL channel and/or to simplify multi-beam operations, a TCI configuration (e.g., unified TCI framework) using a unified TCI pool may be introduced into the communication system. In this case, the base station may preconfigure a common TCI pool commonly used (e.g., applied) for the DL channel and the UL channel to the terminal through signaling (e.g., RRC signaling), and may indicate (e.g., activate or deactivate) a TCI (e.g., TCI for the DL channel and the UL channel) belonging to the common TCI pool to the terminal using a MAC CE and/or DCI.

An update for TCI state(s) (e.g., common TCI state(s)) may be supported. TCI state(s) (e.g., common TCI state(s)) for a plurality of component carriers (CCs) may be indicated (e.g., configured). Among the plurality of CCs, a reference CC may be configured. TCI update(s) for other CCs belonging to a CC list may be performed based on a TCI update command for the reference CC. In other words, TCI updates for the CCs belonging to the CC list may be simultaneously performed based on the TCI update command for the reference CC.

The TCI state may be configured based on two schemes. A TCI state type may be configured as a joint TCI state type or a separate TCI state type. The TCI state type may refer to a unified TCI state type. In the present disclosure, a case in which the TCI state type is configured as the joint TCI state type may be referred to as a case of using a joint TCI state indication scheme, and a case in which the TCI state type is configured as the separate TCI state type may be referred to as a case of using a separate TCI state indication scheme. In the joint TCI state indication scheme, a joint TCI state for a DL channel and a UL channel may be indicated. In the separate TCI state indication scheme, a TCI state for each of a DL channel and a UL channel may be independently indicated. When reciprocity exists between the DL channel and the UL channel, the joint TCI state indication scheme may be used. When reciprocity does not exist between the DL channel and the UL channel, the separate TCI state indication scheme may be used.

To ensure downlink communication reliability and/or to improve transmission rates in cell-edge areas, a physical channel may be used on a TRP or panel basis. For example, the physical channel may be independently used on a TRP or panel basis. Alternatively, a physical channel may be shared by TRPs or panels. Communication based on the above-described schemes may be used for an eMBB scenario and/or a URLLC scenario.

In an mTRP system, to ensure reliability of a PDCCH transmission, the PDCCH transmission may be performed based on different schemes according to a deployment of mTRPs. For example, the PDCCH transmission may be performed based on a single frequency network (SFN) scheme or a non-SFN (NSFN) scheme. In the SFN scheme, different TRPs or different panels may transmit the same PDCCH using the same resource (e.g., the same time resource, the same frequency resource, and/or the same spatial resource). In other words, all TRPs or all panels may transmit the PDCCH using the same DMRS configuration, the same DMRS location, and/or the same DMRS sequence. In this case, from the reception perspective for the TRPs or panels, TCI states may be implicitly configured differently. The above exemplary embodiment may be performed based on a plurality of TCI states of a CORESET. A synchronization constraint for an ideal backhaul or a near-ideal backhaul between the TRPs may exist.

In the NSFN scheme, PDCCHs generated by the respective TRPs may be multiplexed (e.g., time and/or frequency multiplexed) within a same CORESET or different CORESETs, and the multiplexed PDCCHs may be transmitted to the terminal. The above-described scheme may be an mTRP-based PDCCH repetition scheme. In the NSFN scheme, encoded bits to be delivered through a single PDCCH may be split into multiple parts for TRPs, each having the same number of bits, and the TRP-specific bits (e.g., encoded bits) may be transmitted through a different PDCCH candidate. The above-described scheme may be an sTRP-based PDCCH transmission scheme.

In the mTRP-based PDCCH repetition scheme, PDCCHs as many as the number of TRPs may be repeatedly generated, and the PDCCHs may be transmitted in the same search spaces (e.g., search spaces having the same index) within different search space sets having the same number of PDCCH candidates. In this case, the search space sets may exist within the same CORESET or within different CORESETs. Since one TCI state may be associated with each CORESET, when the PDCCHs are transmitted in different search spaces within the same CORESET, only one TCI state may be indicated (e.g., configured) for the PDCCHs transmitted in the different search spaces. In this case, the terminal may receive a PDCCH from one TRP at a specific time.

When the PDCCHs are transmitted in the same search spaces within different CORESETs, the terminal may implicitly expect to receive the PDCCHs from an sTRP or mTRPs according to the number of TCI states (e.g., TCI states indicated or configured by the base station). In this case, a single PDCCH may be split by the number of TRPs, and the split-PDCCHs may be transmitted in different PDCCH candidates. In this case, each aggregation level and a combined aggregation level may be the same. In the above exemplary embodiment, allocation to different CORESETs may be possible. A size of a payload obtained finally by combining the split-PDCCHs may be equal to a size of a payload of a PDCCH to be transmitted by an sTRP. Therefore, in terms of decoding complexity, the sTRP-based PDCCH transmission scheme may be more advantageous than the mTRP-based PDCCH repetition scheme.

A unified TCI (e.g., unified TCI state) may be applied to the mTRP system. In the mTRP system, configuration of a unified TCI state pool may be necessary. In the present disclosure, a TCI pool may refer to a unified TCI state pool.

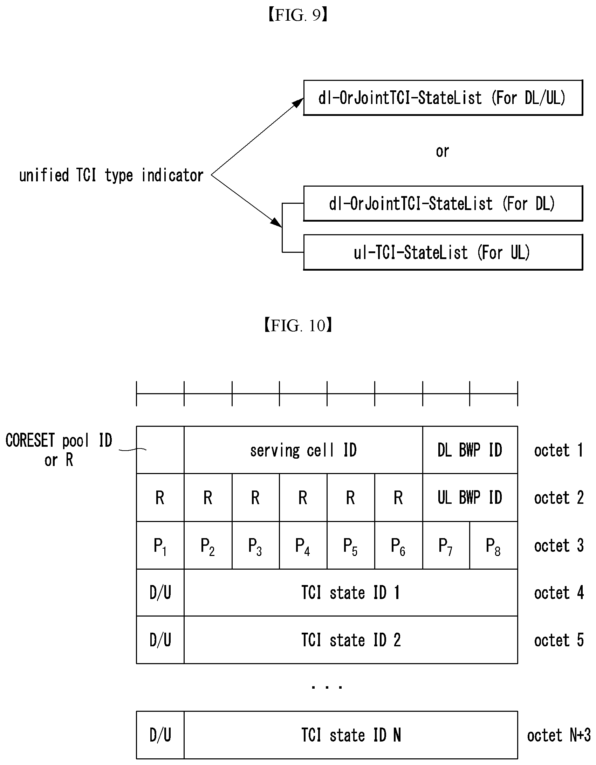

FIG. 9 is a conceptual diagram illustrating a first exemplary embodiment of a method of configuring a unified TCI state pool in an sTRP system.

As shown in FIG. 9, a base station may configure a TCI state type (e.g., joint or separate TCI state type) to a terminal through signaling (e.g., RRC signaling). According to the joint TCI state indication scheme, the base station may configure a joint TCI state list (e.g., *dl-OrJointTCI-StateList*) applied to a DL channel and a UL channel to the terminal. The terminal may receive the joint TCI state list from the base station. According to the separate TCI state indication scheme, the base station may configure a DL TCI state list (e.g., *dl-OrJointTCI-StateList*) applied to a DL channel and a UL TCI state list (e.g., *ul-TCI-StateList)* applied to a UL channel to the terminal. The terminal may receive the DL TCI state list and the UL TCI state list from the base station. A TCI state pool for each TCI state list (e.g., the joint TCI state list, the DL TCI state list, and the UL TCI state list) may be configured to the terminal by signaling (e.g., RRC signaling) of the base station. The base station may transmit selection information on the TCI state type to the terminal through signaling.

The base station may indicate activation or deactivation of TCI states (e.g., TCI pool) for each serving cell to the terminal using a MAC CE. The activation or deactivation of TCI states (e.g., TCI pool) may be dynamically indicated. The base station may configure, to the terminal, lists of serving cells to which a unified TCI state activation/deactivation MAC CE is applied. For example, the base station may preconfigure, to the terminal, a simultaneous unified (U)-TCI-update list 1, simultaneous U-TCI-update list 2, simultaneous U-TCI-update list 3, and/or simultaneous U-TCI-update list 4. Each of the simultaneous U-TCI-update lists may include one or more serving cells. Different simultaneous U-TCI-update lists may not include the same serving cell. In the present disclosure, 'activation/deactivation' may refer to 'activation and/or deactivation'.

The base station may generate a simultaneous U-TCI-update list including serving cells configured with a unified TCI state type (e.g., *unifiedTCI-State Type).* The base station may transmit a joint TCI state indication or a separate TCI state indication for the serving cells belonging to the simultaneous U-TCI-update list. The terminal may activate or deactivate TCI states based on the indication from the base station. The activation or deactivation of TCI states for the serving cells belonging to the same simultaneous U-TCI-update list may be performed simultaneously. The serving cells belonging to the simultaneous U-TCI-update list may not have different TCI type configurations.

FIG. 10 is a conceptual diagram illustrating a first exemplary embodiment of a TCI state activation/deactivation MAC CE.

As shown in FIG. 10, the base station may generate a TCI state activation/deactivation MAC CE indicating activation or deactivation of TCI states (e.g., unified TCI states) and may transmit the TCI state activation/deactivation MAC CE to the terminal. The TCI state activation/deactivation MAC CE may be transmitted on a PDSCH. For the above-described operation, the base station may transmit in advance to the terminal a DCI that schedules the PDSCH on which the TCI state activation/deactivation MAC CE is transmitted. The TCI state activation/deactivation MAC CE may be a unified TCI state activation/deactivation MAC CE. The TCI state activation/deactivation MAC CE may include a CORESET pool index (ID) field (or reserved (R) bit), a serving cell identifier (ID) field, a DL BWP index (ID) field, a UL BWP ID field, a Pᵢ field, a D/U field, a TCI state index (ID) field, and/or reserved (R) bit(s). The R bit(s) may be set to 0. The terminal may receive the TCI state activation/deactivation MAC CE from the base station and may activate or deactivate the TCI states (e.g., unified TCI states) based on the information (e.g., field(s), information element(s)) included in the TCI state activation/deactivation MAC CE.

The CORESET pool ID field may indicate that a mapping between activated TCI states and codepoints of a DCI (e.g., TCI field included in the DCI) is specific to a CORESET (e.g., CORESET pool) for which the CORESET pool ID is set. For example, the CORESET pool ID field set to 1 may indicate that the TCI states are specific to a CORESET pool 1. The CORESET pool ID field set to 0 may indicate that the TCI states are specific to a CORESET pool 0. Alternatively, the CORESET pool ID field may be replaced by a reserved (R) bit. For example, in a case where the CORESET pool ID is not set or only one CORESET pool ID is set, the CORESET pool ID field may be replaced by the R bit.

The serving cell ID field may indicate an identifier of a serving cell to which the TCI state activation/deactivation MAC CE is applied. When the serving cell indicated by the serving cell ID field (e.g., a serving cell having a physical cell identifier (PCI) indicated by the serving cell ID field) belongs to a specific simultaneous U-TCI-update list configured by the base station, the TCI state activation/deactivation MAC CE may be applied to all cells belonging to the specific simultaneous U-TCI-update list.

The DL BWP ID field may indicate a DL BWP to which the TCI state activation/deactivation MAC CE is applied. In other words, the DL BWP ID field may indicate a codepoint of a BWP indicator included in a DCI.

The UL BWP ID field may indicate a UL BWP to which the TCI state activation/deactivation MAC CE is applied. In other words, the UL BWP ID field may indicate a codepoint of a BWP indicator included in a DCI.

The Pᵢ field may indicate whether each TCI codepoint corresponds to multiple TCI states or a single TCI state. The Pᵢ field set to 1 may indicate that the i-th TCI codepoint corresponds to both a DL TCI state and a UL TCI state. The Pᵢ field set to 0 may indicate that the i-th TCI codepoint corresponds to a DL/joint TCI state or a UL TCI state.

The D/U field may indicate whether a TCI state ID field belonging to the same octet as the D/U field is for a joint/DL TCI state or for a UL TCI state. The D/U field set to 1 may indicate that the TCI state ID field in the same octet as the D/U field is for a joint/DL TCI state. The D/U field set to 0 may indicate that the TCI state ID field in the same octet as the D/U field is for a UL TCI state.

The TCI state ID field may indicate a TCI state (e.g., TCI state configuration) identified by *TCI-StateId* or *TCI-UL-State-Id.*

Meanwhile, in the sTRP system, the TRP may be interpreted as a serving cell, and the serving cell ID in FIG. 10 may be interpreted as an ID of the TRP. In the mTRP system, the same TCI pool may be used regardless of TRPs. In other words, in consideration of the overhead of RRC signaling for the TCI pool, the same TCI pool may be used regardless of the TRPs. In an intra-TRP scenario where the mTRPs are associated with the same PCI, a joint TCI state pool and a separate TCI state pool may be commonly configured. The joint TCI state pool and the separate TCI state pool may be configured by signaling (e.g., RRC signaling) of the base station.

In the mTRP system, TRPs may be geographically separated. Accordingly, link conditions between each of the TRPs and the terminal may be different. In this case, a TCI state type may be configured differently for each TRP. In other words, the base station may independently configure a TCI state type for each TRP and may indicate the configured TCI state type to the terminal. For example, a TCI state type of a TRP 1 may be configured as the joint TCI state type, and a TCI state type of a TRP 2 may be configured as the separate TCI state type. Due to a maximum permissible exposure (MPE) issue of the terminal, a different configuration for a TCI state type of a specific TRP may be required. In this case, as in the above-described exemplary embodiment, the TCI state type may be independently configured for each TRP.

As another method, configuration of a TCI state type of a serving cell (e.g., joint or separate TCI state type) may be applied to TRP(s) associated with the serving cell (e.g., a PCI of the serving cell). In this case, the same TCI state type may be applied to both the serving cell and the TRP(s) associated with the serving cell. In consideration of signaling overhead and/or system complexity, a method in which a TCI state type of a serving cell is applied to TRP(s) associated with the serving cell may be more appropriate than a method in which a TCI state type is independently configured for each TRP.

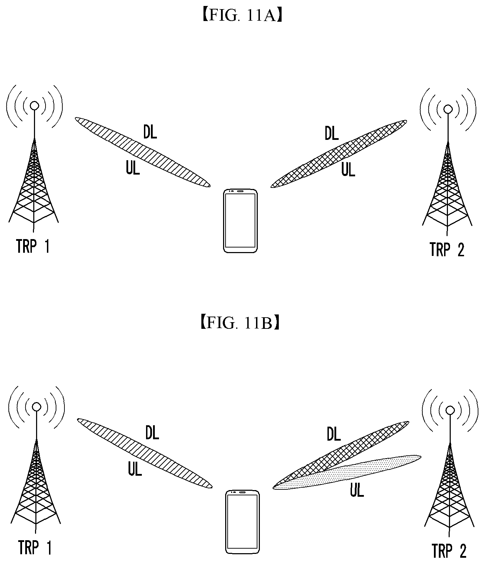

FIG. 11A is a conceptual diagram illustrating a first exemplary embodiment of a method of configuring TCI state types in an mTRP system.

As shown in FIG. 11A, a first TRP and a second TRP may belong to the same serving cell. In other words, the first TRP and the second TRP may be associated with the same PCI (e.g., PCI of the serving cell). A TCI state type of the serving cell may be applied to the TRP(s) associated with the serving cell (e.g., the first TRP and the second TRP). When the TCI state type of the serving cell is configured as the joint TCI state type, the terminal may interpret the TCI state types of the TRPs associated with the serving cell as the joint TCI state type. When the TCI state type of the serving cell is configured as the separate TCI state type, the terminal may interpret the TCI state types of the TRPs associated with the serving cell as the separate TCI state type. To support the above-described operation, the base station may signal, to the terminal, information indicating that the method in which the TCI state type of the serving cell is applied to the TRP(s) associated with the serving cell is used (e.g., supported). In this case, the terminal may apply the TCI state type of the serving cell configured by the base station to the TRPs associated with the serving cell based on the indication from the base station.

FIG. 11B is a conceptual diagram illustrating a second exemplary embodiment of a method of configuring TCI state types in an mTRP system.

As shown in FIG. 11B, a first TRP and a second TRP may belong to the same serving cell or to different serving cells. A TCI state type may be configured differently for each TRP. The base station may independently configure a TCI state type for each TRP, and may indicate the configured TCI state type to the terminal. For example, the base station may configure the TCI state type of the first TRP as the joint TCI state type and may configure the TCI state type of the second TRP as the separate TCI state type. The terminal may identify the TCI state type configured for each TRP by the base station. To support the above-described operation, the base station may signal, to the terminal, information indicating that the method in which the TCI state type is independently configured for each TRP is used (e.g., supported). In this case, the terminal may identify the TCI state type independently configured for each TRP based on the indication from the base station.

Meanwhile, serving cells having similar physical properties and/or similar channels may be configured as one list (e.g., simultaneous U-TCI-update list), and the TCI states for all serving cells included in the list may be updated (e.g., activated and/or deactivated) using a single TCI state activation/deactivation MAC CE. The above-described operation may be applied to an mTRP system.

In the mTRP system, the base station may independently indicate the TCI state type for each TRP through signaling (e.g., RRC signaling). For example, the base station may generate configuration information including a TCI state type and an identifier of a TRP to which the TCI state type is applied (e.g., TRP ID, CORESET ID, CORESET group ID) and may signal the configuration information to the terminal. Detailed methods for the above-described operation may be as follows.

### [Method #1]

Method #1 may be a method for reducing system complexity and/or signaling overhead. The TCI state type of the serving cell may be applied to TRPs associated with the serving cell (e.g., the same PCI). Method #1 may correspond to the exemplary embodiment of FIG. 11A. In this case, the base station may not separately configure the TCI state type for each TRP to the terminal through signaling (e.g., RRC signaling). For example, when the base station indicates the TCI state type (e.g., joint or separate TCI state type) of the serving cell to the terminal through signaling (e.g., RRC signaling), the TCI state type of the serving cell may be applied to all TRPs associated with the serving cell (e.g., the PCI of the serving cell). When the TCI state type of the serving cell is configured as the joint TCI state type, the same TCI state may be used in DL channels and UL channels of the respective TRPs associated with the serving cell.

The TCI states configured for the respective TRPs may be independent. For example, the TCI states of the first TRP may differ from the TCI states of the second TRP, and the same TCI state may be used in a DL channel and a UL channel of the first TRP, and the same TCI state may be used in a DL channel and a UL channel of the second TRP, and the TCI state applied to the first TRP and the TCI state applied to the second TRP may be independent. When the TCI state type of the serving cell is configured as the separate TCI state type, TCI states may be independently configured in the DL channel and the UL channel of each TRP associated with the serving cell. Activation or deactivation of the TCI states for each of the DL channel and the UL channel may be indicated. Depending on whether the TCI states are transmittable for multiple TRPs, a structure of the TCI state activation/deactivation MAC CE (e.g., the structure of the unified TCI state activation/deactivation MAC CE) may vary. In the present disclosure, the MAC CE may refer to a MAC CE for activation/deactivation of TCI states (e.g., unified TCI states).

### [Method #1-1]

The base station may activate/deactivate (e.g., activate and/or deactivate) TCI state(s) for an sTRP using a single MAC CE. The above-described operation may be applied when activation/deactivation of TCI state(s) for TRPs does not need to be performed simultaneously. A single MAC CE may be used to configure (e.g., indicate) activation/deactivation of TCI state(s) for one TRP.

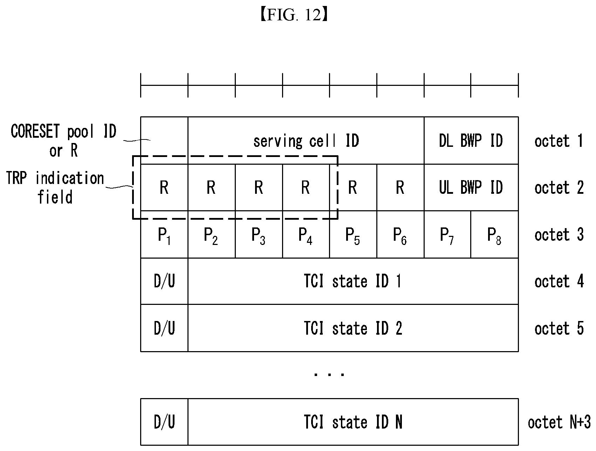

FIG. 12 is a conceptual diagram illustrating a second exemplary embodiment of a TCI state activation/deactivation MAC CE.

As shown in FIG. 12, the base station may generate a TCI state activation/deactivation MAC CE indicating activation or deactivation of TCI state(s) (e.g., unified TCI state(s)) and may transmit the TCI state activation/deactivation MAC CE to the terminal. For the above-described operation, the base station may transmit in advance to the terminal a DCI that schedules a PDSCH on which the TCI state activation/deactivation MAC CE is transmitted. The TCI state activation/deactivation MAC CE may be a unified TCI state activation/deactivation MAC CE. The TCI state activation/deactivation MAC CE may include a CORESET pool ID field (or R bit), a serving cell ID field, a DL BWP ID field, a UL BWP ID field, a Pᵢ field, a D/U field, a TCI state ID field, and/or R bit(s). In addition, the TCI state activation/deactivation MAC CE may further include a TRP indication field. In this case, some R bits in the TCI state activation/deactivation MAC CE may be configured as the TRP indication field. As another method, the serving cell ID field in the TCI state activation/deactivation MAC CE may be configured as the TRP indication field. In other words, the TCI state activation/deactivation MAC CE may include the TRP indication field instead of the serving cell ID field. The R bit(s) may be set to 0.

The meanings of the CORESET pool ID field, the serving cell ID field, the DL BWP ID field, the UL BWP ID field, the Pᵢ field, the D/U field, and the TCI state ID field included in the TCI state activation/deactivation MAC CE illustrated in FIG. 12 may be the same as or similar to the meanings of the CORESET pool ID field, the serving cell ID field, the DL BWP ID field, the UL BWP ID field, the Pᵢ field, the D/U field, and the TCI state ID field included in the TCI state activation/deactivation MAC CE illustrated in FIG. 10.

In the exemplary embodiment of FIG. 12, some R bit(s) included in the TCI state activation/deactivation MAC CE may be used to indicate TRP(s). In other words, some R bit(s) may be used to indicate TRP(s) associated with TCI states to be activated or deactivated. The R bit(s) used to indicate the TRP(s) may be referred to as the TRP indication field. The number of bits included in the TRP indication field may vary depending on the number of TRPs associated with one PCI. In case that a bitwise scheme (e.g., bitmap scheme) is used, when M TRPs are associated with one PCI (e.g., when M TRPs are associated with one base station or one cell), the number of bits included in the TRP indication field may be M. M may be a natural number. The bitwise scheme may be referred to as a bitmap scheme. The M bits included in the TRP indication field may be linked to indexes of the respective TRPs in descending or ascending order. The bits included in the TRP indication field may be mapped one-to-one with the TRPs. When a logarithmic (log) scheme is used, the number of bits included in one TRP indication field may be log₂M.

When the base station supports four TRPs (e.g., four TRPs are associated with the serving cell), and the base station indicates activation or deactivation of TCI states for the third TRP, the TRP indication field may be set to '0010' in the bitwise scheme, and may be set to '10' in the logarithmic scheme. When TRPs are distinguished by CORESET IDs, the CORESET ID may be associated with a bit index corresponding to (CORESET ID + 1) within the TRP indication field. When the TRP indication field includes four bits, the first, second, third, and fourth bits within the TRP indication field may be associated with CORESET #0, #1, #2, and #3, respectively.

### [Method #1-2]

The base station may activate and/or deactivate TCI state(s) for mTRPs using a single MAC CE. According to Method #1-1, it may not be possible to simultaneously activate and/or deactivate TCI state(s) for mTRPs using a single MAC CE. According to Method #1-2, it may be possible to simultaneously activate and/or deactivate TCI state(s) for mTRPs using a single MAC CE. In other words, when it is required to activate and/or deactivate TCI state(s) for mTRPs using a single MAC CE, Method #1-2 may be used.

Method #1-2 may be classified into Method #1-2a and Method #1-2b. In Method #1-2a, the base station may activate and/or deactivate the same TCI state(s) for mTRPs using a single MAC CE. In Method #1-2b, the base station may activate and/or deactivate different TCI states for mTRPs using a single MAC CE.

In Method #1-2a, the MAC CE (e.g., TCI state activation/deactivation MAC CE) may include a TRP indication field indicating a plurality of TRPs, and the same TCI state(s) for the plurality of TRPs indicated by the TRP indication field may be activated or deactivated. For example, when four TRPs are associated with one serving cell (e.g., one base station), the size of the TRP indication field may be four bits. When the TRP indication field included in the MAC CE is set to '1010', activation or deactivation for the first TCI state ID and the third TCI state ID among the N TCI state IDs included in the MAC CE may be simultaneously indicated. Each of the N TCI state IDs included in the MAC CE may be common for the plurality of TRPs. In terms of the payload size of the MAC CE, the exemplary embodiment may be advantageous compared to an exemplary embodiment described below.

As another method, TCI state(s) for each of a plurality of TRPs may be configured separately. A single MAC CE may include information on TCI state(s) for each of the plurality of TRPs. In this case, the payload size of the single MAC CE may increase.

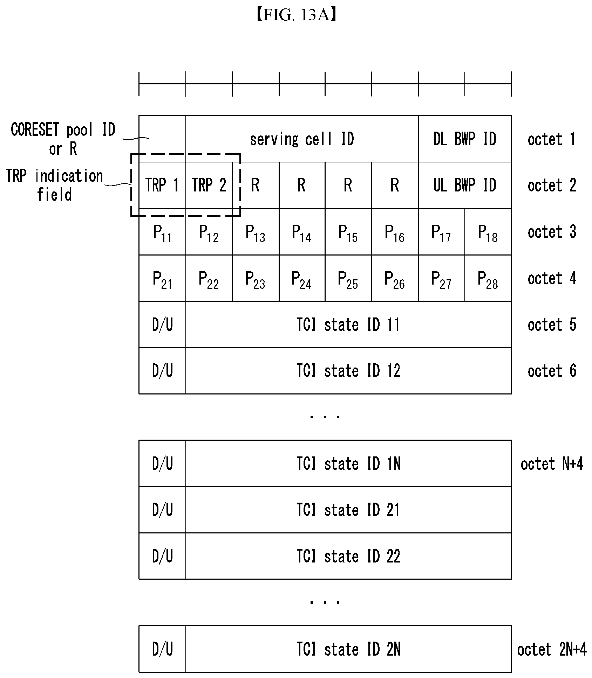

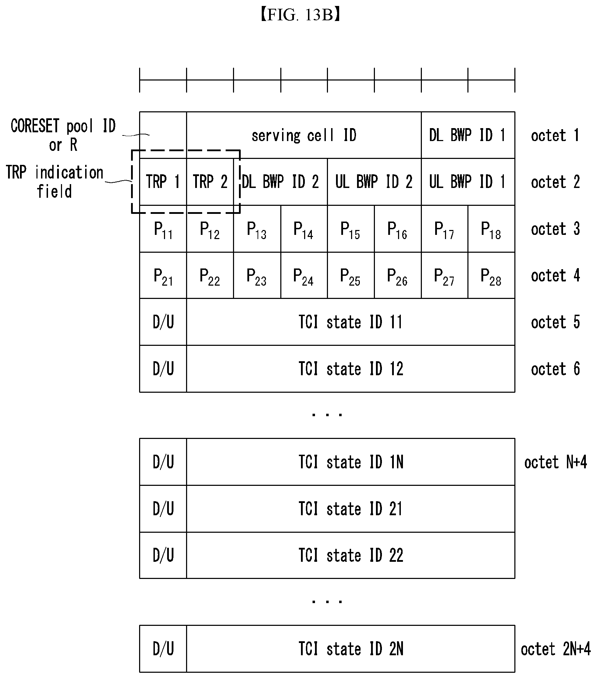

FIG. 13A is a conceptual diagram illustrating a third exemplary embodiment of a TCI state activation/deactivation MAC CE, and FIG. 13B is a conceptual diagram illustrating a fourth exemplary embodiment of a TCI state activation/deactivation MAC CE.

As shown in FIG. 13A and FIG. 13B, the base station may transmit a TCI state activation/deactivation MAC CE indicating activation or deactivation of TCI states (e.g., unified TCI states) to the terminal. For the above-described operation, the base station may transmit, in advance, a DCI for scheduling the PDSCH on which the TCI state activation/deactivation MAC CE is transmitted to the terminal. The TCI state activation/deactivation MAC CE may be an unified TCI state activation/deactivation MAC CE. The TCI state activation/deactivation MAC CE may include a CORESET pool ID field (or R bits), a serving cell ID field, a DL BWP ID field (e.g., DL BWP ID 1 field, DL BWP ID 2 field), a UL BWP ID field (e.g., UL BWP ID 1 field, UL BWP ID 2 field), a TRP indication field, a Pᵢ field (e.g., P₁ᵢ field, P₂ᵢ field), a D/U field, a TCI state index (ID) field, and/or R bit(s). As another method, the serving cell ID field in the TCI state activation/deactivation MAC CE may be configured as a TRP indication field. In other words, the TCI state activation/deactivation MAC CE may include the TRP indication field instead of the serving cell ID field. The R bit(s) may be set to 0. The P₁ᵢ field may indicate whether each TCI codepoint for the first TRP corresponds to multiple TCI states or a single TCI state. The P₂ᵢ field may indicate whether each TCI codepoint for the second TRP corresponds to multiple TCI states or a single TCI state.

The meanings of the CORESET pool ID field, the serving cell ID field, the DL BWP ID field, the UL BWP ID field, the TRP indication field, the Pᵢ field, the D/U field, and the TCI state ID field included in the TCI state activation/deactivation MAC CEs shown in FIG. 13A and FIG. 13B may be the same as or similar to the meanings of the CORESET pool ID field, the serving cell ID field, the DL BWP ID field, the UL BWP ID field, the TRP indication field, the Pᵢ field, the D/U field, and the TCI state ID field included in the TCI state activation/deactivation MAC CE shown in FIG. 12.

The number of TRPs associated with the serving cell indicated by the serving cell ID field included in the MAC CE (e.g., TCI state activation/deactivation MAC CE) may be M, and the number of TCI state IDs for each TRP within the MAC CE may be N. In this case, the number of TCI state ID fields included in the MAC CE may be M×N. Each of M and N may be a natural number.

When the plurality of TRPs indicated by the MAC CE share the same DL/UL BWP, the MAC CE shown in FIG. 13A may be used. The DL BWP ID field included in the MAC CE may indicate a DL BWP for the first TRP and the second TRP, and the UL BWP ID field included in the MAC CE may indicate a UL BWP for the first TRP and the second TRP. When the plurality of TRPs indicated by the MAC CE have different DL/UL BWPs, the MAC CE shown in FIG. 13B may be used. The DL BWP ID 1 field included in the MAC CE may indicate a DL BWP for the first TRP, and the UL BWP ID 1 field included in the MAC CE may indicate a UL BWP for the first TRP. The DL BWP ID 2 field included in the MAC CE may indicate a DL BWP for the second TRP, and the UL BWP ID 2 field included in the MAC CE may indicate a UL BWP for the second TRP. In the exemplary embodiment of FIG. 13B, some R bits included in the MAC CE may be configured as the DL BWP ID 2 field and the UL BWP ID 2 field.

In the exemplary embodiments of FIG. 13A and FIG. 13B, activation or deactivation indication of TCI state(s) for a plurality of TRPs may be performed at once. Therefore, the logarithmic scheme proposed in Method #1-1 may not be applicable for configuring the TRP indication field. The number of TCI state ID fields included in the MAC CE shown in FIG. 13A and FIG. 13B may be M×N, and the number of TCI state ID fields included in the MAC CE shown in FIG. 12 may be N. The number of TCI state ID fields included in the MAC CE shown in FIG. 13A and FIG. 13B may be greater by (M-1)×N than the number of TCI state ID fields included in the MAC CE shown in FIG. 12. M may be the number of TRPs associated with the serving cell indicated by the serving cell ID field included in the MAC CE.

Meanwhile, in order to simultaneously activate and/or deactivate TCI states for serving cells belonging to the same list, the base station may configure simultaneous U-TCI-update list(s) to the terminal through signaling (e.g., RRC signaling). Similarly to the above-described method, in order to simultaneously activate and/or deactivate TCI states for TRPs belonging to the same list, the base station may configure simultaneous U-TCI-TRP-update list(s) to the terminal through signaling (e.g., RRC signaling). Each of the simultaneous U-TCI-TRP-update lists may include one or more TRPs. The same TRP may not be included in different simultaneous U-TCI-TRP-update lists.

When Method #1 is used, the same TCI state type (e.g., joint or separate TCI state type) may be applied to TRPs (e.g., TRPs associated with the serving cell) and the serving cell (e.g., base station). Therefore, the base station may signal the simultaneous U-TCI-TRP-update list(s) to the terminal through a hierarchical structure. The simultaneous U-TCI-TRP-update list may include TRP identifiers (e.g., TRP IDs). The terminal may receive the simultaneous U-TCI-TRP-update list(s) from the base station. When the simultaneous U-TCI-TRP-update list(s) are configured to the terminal, and a TRP (e.g., single TRP) indicated by a TCI state activation/deactivation MAC CE belongs to a specific simultaneous U-TCI-TRP-update list, the terminal may activate or deactivate TCI state(s) for all TRPs belonging to the specific simultaneous U-TCI-TRP-update list based on the indication of the TCI state activation/deactivation MAC CE. In other words, the terminal may activate or deactivate TCI state(s) for a TRP indicated by the TRP indication field included in the TCI state activation/deactivation MAC CE, may identify the remaining TRPs among all TRPs belonging to the specific U-TCI-TRP-update list to which the TRP belongs, and may activate or deactivate the TCI states for the remaining TRPs.

The base station may transmit the simultaneous U-TCI-TRP-update list(s) to the terminal for each PCell through signaling (e.g., RRC signaling). The simultaneous U-TCI-TRP-update list may include not only TRP identifier(s) but also PCI (e.g., ID of a serving cell associated with the TRP(s)). All TRPs included in the simultaneous U-TCI-TRP-update list may be associated with one PCI (e.g., one serving cell). The terminal may receive the simultaneous U-TCI-TRP-update list(s) from the base station and may identify information (e.g., TRP identifiers and/or PCIs) included in the simultaneous U-TCI-TRP-update list(s). When the simultaneous U-TCI-TRP-update list(s) are configured, the terminal may simultaneously activate or deactivate TRPs for each cell (e.g., base station) based on the TCI state activation/deactivation MAC CE.

For example, the base station may configure the simultaneous U-TCI-update list 1 for the terminal, and the terminal may receive the simultaneous U-TCI-update list 1 from the base station. The simultaneous U-TCI-update list 1 configured for the terminal may be {PCI 3, PCI 4, PCI 5}. The base station may configure the simultaneous U-TCI-TRP-update list 1 for the terminal, and the terminal may receive the simultaneous U-TCI-TRP-update list 1 from the base station. The simultaneous U-TCI-TRP-update list 1 configured for the terminal may be {TRP 1, TRP 2} associated with PCI 3. In this case, the base station may generate a TCI state activation/deactivation MAC CE including a serving cell ID field indicating PCI 3 and a TRP indication field indicating TRP 1, and may transmit the TCI state activation/deactivation MAC CE to the terminal. The terminal may receive the TCI state activation/deactivation MAC CE from the base station and may identify information (e.g., field(s), information element(s)) included in the TCI state activation/deactivation MAC CE.

When the serving cell ID field included in the TCI state activation/deactivation MAC CE indicates PCI 3, and PCI 3 (e.g., a serving cell having PCI 3) belongs to the simultaneous U-TCI-update list 1 configured by the base station, the terminal may activate or deactivate all serving cells belonging to the simultaneous U-TCI-update list 1 (e.g., serving cell having PCI 3, serving cell having PCI 4, and serving cell having PCI 5). In addition, when the TRP indication field included in the TCI state activation/deactivation MAC CE indicates TRP 1, and TRP 1 belongs to the simultaneous U-TCI-TRP-update list 1 configured by the base station, the terminal may activate or deactivate all TRPs belonging to the simultaneous U-TCI-TRP-update list 1.

As another method, the base station may configure simultaneous U-TCI-TRP-update list(s) for each simultaneous U-TCI-update list, and may indicate the simultaneous U-TCI-update list and the simultaneous U-TCI-TRP-update list(s) to the terminal. The terminal may receive the simultaneous U-TCI-update list and the simultaneous U-TCI-TRP-update list(s) from the base station. The simultaneous U-TCI-update list may be associated with one or more simultaneous U-TCI-TRP-update lists. In this case, the base station may transmit a TCI state activation/deactivation MAC CE to the terminal. The terminal may receive the TCI state activation/deactivation MAC CE from the base station. When a serving cell indicated by the serving cell ID field included in the TCI state activation/deactivation MAC CE belongs to a simultaneous U-TCI-update list configured by the base station, and simultaneous U-TCI-TRP-update list(s) associated with the simultaneous U-TCI-update list are configured by the base station, the terminal may activate or deactivate all serving cells belonging to the simultaneous U-TCI-update list and all TRPs belonging to the simultaneous U-TCI-TRP-update list(s) associated with the simultaneous U-TCI-update list.

For example, the base station may configure the simultaneous U-TCI-update list 1 to the terminal, and the terminal may receive the simultaneous U-TCI-update list 1 from the base station. The simultaneous U-TCI-update list 1 configured to the terminal may be {PCI 3, PCI 4, PCI 5}. The base station may configure the simultaneous U-TCI-TRP-update list 1 associated with the simultaneous U-TCI-update list 1 for the terminal, and the terminal may receive the simultaneous U-TCI-TRP-update list 1 associated with the simultaneous U-TCI-update list 1 from the base station. The simultaneous U-TCI-TRP-update list 1 configured to the terminal may be {TRP 0, TRP 1}. In this case, the base station may generate a TCI state activation/deactivation MAC CE including a serving cell ID field indicating PCI 4, a TRP indication field indicating TRP 1, and the like, and may transmit the TCI state activation/deactivation MAC CE to the terminal. The terminal may receive the TCI state activation/deactivation MAC CE from the base station and may identify information (e.g., field(s), information element(s)) included in the TCI state activation/deactivation MAC CE.

When the serving cell ID field included in the TCI state activation/deactivation MAC CE indicates PCI 4, and PCI 4 (e.g., serving cell having PCI 4) belongs to the simultaneous U-TCI-update list 1 configured by the base station, the terminal may activate or deactivate all serving cells belonging to the simultaneous U-TCI-update list 1 (e.g., serving cell having PCI 3, serving cell having PCI 4, and serving cell having PCI 5). In addition, when the TRP indication field included in the TCI state activation/deactivation MAC CE indicates TRP 1, and TRP 1 belongs to the simultaneous U-TCI-TRP-update list 1 associated with the simultaneous U-TCI-update list 1, the terminal may activate or deactivate all TRPs belonging to the simultaneous U-TCI-TRP-update list 1 (e.g., TRP 0 and TRP 1). In other words, the terminal may activate or deactivate TRP 0 and TRP 1 for each of the serving cells belonging to the simultaneous U-TCI-update list 1.

As another method, the TCI state activation/deactivation MAC CE may not include the TRP indication field. Alternatively, the TRP indication field included in the TCI state activation/deactivation MAC CE may not indicate a specific TRP. In this case, the base station may generate a TCI state activation/deactivation MAC CE including a serving cell ID field indicating PCI 4 and the like, and may transmit the TCI state activation/deactivation MAC CE to the terminal. The terminal may receive the TCI state activation/deactivation MAC CE from the base station and may identify information (e.g., field(s), information element(s)) included in the TCI state activation/deactivation MAC CE.

When the serving cell ID field included in the TCI state activation/deactivation MAC CE indicates PCI 4, and PCI 4 (e.g., serving cell having PCI 4) belongs to the simultaneous U-TCI-update list 1 configured by the base station, the terminal may activate or deactivate all serving cells belonging to the simultaneous U-TCI-update list 1 (e.g., serving cell having PCI 3, serving cell having PCI 4, and serving cell having PCI 5). In addition, the terminal may activate or deactivate all TRPs (e.g., TRP 0 and TRP 1) belonging to the simultaneous U-TCI-TRP-update list 1 associated with the simultaneous U-TCI-update list 1. In other words, the terminal may activate or deactivate the TRP 0 and TRP 1 respectively corresponding to the serving cells belonging to the simultaneous U-TCI-update list 1.

In the above-described exemplary embodiment, when the TCI state type is configured as the joint TCI state type, the UL BWP ID field may be configured as R bits.

### [Method #2]

TRPs may be geographically separated. In this case, links between the respective TRPs associated with the same base station (e.g., the same cell) and the terminal may be independent. For example, a link between a TRP 1 associated with a base station 1 and the terminal may be independent of a link between a TRP 2 associated with the base station 1 and the terminal. In this situation, channel reciprocity may not be satisfied. In Method #1, activation or deactivation of TCI state(s) of TRPs having the same TCI state type (e.g., joint or independent TCI state type) may be indicated. On the other hand, in Method #2, activation or deactivation of TCI state(s) of TRPs having different TCI state types may be indicated. The TCI state type(s) of the TRPs may be configured independently of TCI state type of the serving cell associated with the TRPs. For example, the base station may transmit information indicating the TCI state type of the serving cell to the terminal, and may transmit information indicating TCI state type(s) of the TRP(s) to the terminal. The terminal may identify the TCI state type of the serving cell and/or the TCI state type(s) of the TRP(s) based on the information received from the base station.

A structure of a TCI state activation/deactivation MAC CE for Method #2 may be identical to the structure of the TCI state activation/deactivation MAC CE for Method #1 (e.g., the TCI state activation/deactivation MAC CE shown in FIG. 12, FIG. 13A, and/or FIG. 13B). Since the TCI state activation/deactivation MAC CE has a common structure regardless of TCI state type, the TCI state activation/deactivation MAC CE having the same structure may be applied in both Method #1 and Method #2.

In Method #1, TRPs may be assumed to have the same TCI state type. Therefore, one or two codepoints may be allocated depending on the TCI state type. When the TCI state type is the joint TCI state type, one codepoint may be allocated. When the TCI state type is the separate TCI state type, two codepoints may be allocated.

In Method #2, since the TRPs have different TCI state types, one or two codepoints may be allocated for each TRP. A bit for indicating the TCI state type for each TRP may be added to the TCI state activation/deactivation MAC CE. For example, when M TRPs are associated with the serving cell and the TRP indication field is configured in a logarithmic scheme, the TRP indication field may include M bits + log₂ M bits. The log₂ M bits may be used to indicate a specific TRP. The M bits may be used to indicate the TCI state type of each **TRP.** The M bits may be associated with the M TRPs in ascending or descending order.

For example, when the number of TRPs associated with the serving cell is 4, the TRP indication field may include 4 bits + log₂ 4 bits. The terminal may identify a TCI state type of a TRP associated with a specific bit (e.g., a specific bit among the 4 bits) based on a value (e.g., 0 or 1) of the specific bit corresponding to a TRP subject to activation or deactivation. When the value of the specific bit among the M bits is set to 0, the terminal may determine the TCI state type of the TRP associated with the specific bit as the joint TCI state type. When the value of the specific bit among the M bits is set to 1, the terminal may determine the TCI state type of the TRP associated with the specific bit as the separate TCI state type. Alternatively, when the value of the specific bit among the M bits is set to 0, the terminal may determine the TCI state type of the TRP associated with the specific bit as the separate TCI state type. When the value of the specific bit among the M bits is set to 0 1, the terminal may determine the TCI state type of the TRP associated with the specific bit as the joint TCI state type.

In the above-described exemplary embodiment, the number of bits of the TCI state ID field may vary according to the number of TCI state pools configured for a DL channel and/or a UL channel. In the above-described exemplary embodiment, the number of bits of the TRP indication field included in the TCI state activation/deactivation MAC CE may vary according to the number of TRPs associated with one serving cell (e.g., one PCI).

In the above-described exemplary embodiment, the simultaneous U-TCI-update list may include information indicating each serving cell (e.g., PCI). Alternatively, the simultaneous U-TCI-update list may include information indicating a serving cell having the lowest index among the serving cells and information indicating a serving cell having the highest index among the serving cells. In other words, the simultaneous U-TCI-update list may be configured as {PCI A, PCI B}. Each of A and B may be a natural number, and B may be greater than A. PCI A may be a PCI of the serving cell having the lowest index among the serving cells indicated by the simultaneous U-TCI-update list. PCI B may be a PCI of the serving cell having the highest index among the serving cells indicated by the simultaneous U-TCI-update list. When the simultaneous U-TCI-update list is configured as {PCI A, PCI B}, the terminal may determine that the serving cells having PCI A to PCI B belong to the simultaneous U-TCI-update list.

In the above-described exemplary embodiment, the simultaneous U-TCI-TRP-update list may include information indicating each TRP (e.g., TRP ID). The simultaneous U-TCI-TRP-update list may include information indicating a TRP having the lowest index among the TRPs and information indicating a TRP having the highest index among the TRPs. In other words, the simultaneous U-TCI-TRP-update list may be configured as {TRP A, TRP B}. Each of A and B may be a natural number, and B may be greater than A. TRP A may be a TRP ID of the TRP having the lowest index among the TRPs indicated by the simultaneous U-TCI-TRP-update list. TRP B may be a TRP ID of the TRP having the highest index among the TRPs indicated by the simultaneous U-TCI-TRP-update list. When the simultaneous U-TCI-TRP-update list is configured as {TRP A, TRP B}, the terminal may determine that the TRPs having TRP A to TRP B belong to the simultaneous U-TCI-TRP-update list.

In the above-described exemplary embodiment, TRPs may be geographically separated. Therefore, a TCI state pool may be configured for each TRP or TRP group. TRPs belonging to a TRP group may share the same TCI state pool.

When a TCI state type is the joint TCI state type, up to one TCI state may be mapped to one codepoint. When a TCI state type is the separate TCI state type, up to two TCI states may be mapped to one codepoint. In other words, when the TCI state type is the separate TCI state type, one TCI state for a DL channel may be mapped to one codepoint, and one TCI state for a UL channel may be mapped to one codepoint. The number of TCI states to be activated or deactivated may be one.

In the mTRP system, one codepoint may be configured to indicate TCI states for a plurality of TRPs. For example, when the TCI state type is the joint TCI state type, a codepoint 1 may be configured to indicate {joint TCI state 1 for first TRP, joint TCI state 1 for second TRP}, and a codepoint 2 may be configured to indicate {joint TCI state 2 for first TRP, joint TCI state 2 for second TRP}, and so on. When the TCI state type is the separate TCI state type, a codepoint 1 may be configured to indicate {DL TCI state 1 for first TRP, UL TCI state 1 for first TRP, DL TCI state 2 for second TRP, UL TCI state 2 for second TRP}, and so on.

In the above-described exemplary embodiment, the terminal may transmit, to the base station, information indicating whether simultaneous activation/deactivation of TCI states for TRPs is supported. The information indicating whether simultaneous activation/deactivation of TCI states for TRPs is supported may be included in UE capability information transmitted by the terminal to the base station. The base station may determine whether the terminal supports simultaneous activation/deactivation of TCI states for TRPs based on the information received from the terminal.

The terminal may transmit, to the base station, information indicating whether TCI states for all TRPs are activated/deactivated at once or information indicating whether TCI states are activated/deactivated separately (e.g., independently) for each TRP or BWP. The base station may identify the operation supported by the terminal (e.g., simultaneous activation/deactivation of TCI states or independent activation/deactivation of TCI states) based on the information received from the terminal.

When updating (e.g., activating or deactivating) TCI states for serving cells included in a cell list subject to activation/deactivation (e.g., simultaneous U-TCI-update list), not only the serving cells subject to activation/deactivation but also all TRPs associated with the serving cells may be activated or deactivated simultaneously to achieve gains in terms of signaling overhead. For flexible use of TRPs or TCI states, bit(s) (e.g., field(s)) individually indicating TRPs subject to update may be configured in a MAC CE and/or DCI. The bit(s) may be configured in descending or ascending order of indexes of all TRPs associated with the same PCI or indexes of actually used TRPs. The bit(s) may be configured in a bitwise form. Each of the bit(s) may be indicated (e.g., configured) in an on/off form.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), comprising:
receiving a transmission configuration indicator (TCI) state activation/deactivation medium access control (MAC) control element (CE) from a base station, the TCI state activation/deactivation MAC CE indicating activation or deactivation of TCI state(s);
identifying one or more transmission and reception points (TRPs) indicated by a TRP indication field included in the TCI state activation/deactivation MAC CE;
identifying one or more TCI state indexes (IDs) associated with the one or more TRPs, based on TCI state ID fields included in the TCI state activation/deactivation MAC CE; and
activating or deactivating one or more TCI states having the one or more TCI state IDs.

2. The method according to claim 1, wherein the TCI state activation/deactivation MAC CE further includes a serving cell identifier (ID) field, and the one or more TRPs are associated with a serving cell indicated by the serving cell ID.

3. The method according to claim 2, wherein a size of the TRP indication field varies depending on a number of the one or more TRPs associated with the serving cell, and when the number of the one or more TRPs is M, the size of the TRP indication field is M bits or log₂ *M* bits, and M is a natural number.

4. The method according to claim 2, further comprising: receiving information indicating a TCI state type of the serving cell from the base station,
wherein the TCI state type is indicated as a joint TCI state type or a separate TCI state type, and the TCI state type of the serving cell is applied to the one or more TRPs associated with the serving cell.

5. The method according to claim 2, further comprising:
receiving information indicating a TCI state type of the serving cell from the base station; and
receiving information indicating TCI state types of a plurality of TRPs from the base station,
wherein the TCI state types of the plurality of TRPs are configured independently from the TCI state type of the serving cell, and the one or more TRPs belong to the plurality of TRPs.

6. The method according to claim 1, further comprising: receiving one or more simultaneous unified (U)-TCI-TRP-update lists from the base station,
wherein activation or deactivation of TCI states for TRPs belonging to each of the one or more simultaneous U-TCI-TRP-update lists is performed simultaneously.

7. The method according to claim 6, further comprising:
in response to the one or more simultaneous U-TCI-TRP-update lists being configured by the base station, identifying simultaneous U-TCI-TRP-update list(s) to which the one or more TRPs belong among the one or more simultaneous U-TCI-TRP-update lists;
identifying all TRPs belonging to the identified simultaneous U-TCI-TRP-update list(s); and
activating or deactivating TCI states for remaining TRPs among all the identified TRPs, excluding the one or more TRPs.

8. The method according to claim 1, wherein when the one or more TRPs include a first TRP and a second TRP, the TCI state activation/deactivation MAC CE includes a downlink (DL) bandwidth part (BWP) 1 field indicating a first DL BWP for the first TRP, an uplink (UL) BWP 1 field indicating a first UL BWP for the first TRP, a DL BWP 2 field indicating a second DL BWP for the second TRP, and a UL BWP 2 field indicating a second UL BWP for the second TRP.

9. The method according to claim 1, wherein when the one or more TRPs include a first TRP and a second TRP, the TCI state activation/deactivation MAC CE includes a DL BWP field indicating a DL BWP for the first TRP and the second TRP, and a UL BWP field indicating a UL BWP for the first TRP and the second TRP.

10. A method of a base station, comprising:
generating a transmission configuration indicator (TCI) state activation/deactivation medium access control (MAC) control element (CE) including a TRP indication field indicating one or more transmission and reception points (TRPs) and one or more TCI state index (ID) fields associated with the one or more TRPs; and
transmitting the TCI state activation/deactivation MAC CE to a user equipment (UE),
wherein the TCI state activation/deactivation MAC CE indicates activation or deactivation of one or more TCI states associated with the one or more TRPs.

11. The method according to claim 10, wherein the TCI state activation/deactivation MAC CE further includes a serving cell identifier (ID) field, and the one or more TRPs are associated with a serving cell indicated by the serving cell ID.

12. The method according to claim 11, wherein a size of the TRP indication field varies depending on a number of the one or more TRPs associated with the serving cell, and when the number of the one or more TRPs is M, the size of the TRP indication field is M bits or log₂ M bits, and M is a natural number.

13. The method according to claim 11, further comprising: transmitting information indicating a TCI state type of the serving cell to the UE,
wherein the TCI state type is indicated as a joint TCI state type or a separate TCI state type, and the TCI state type of the serving cell is applied to the one or more TRPs associated with the serving cell.

14. The method according to claim 11, further comprising:
transmitting information indicating a TCI state type of the serving cell to the UE; and
transmitting information indicating TCI state types of a plurality of TRPs to the UE,
wherein the TCI state types of the plurality of TRPs are configured independently from the TCI state type of the serving cell, and the one or more TRPs belong to the plurality of TRPs.

15. The method according to claim 10, further comprising: transmitting one or more simultaneous unified (U)-TCI-TRP-update lists to the UE,
wherein activation or deactivation of TCI states for TRPs belonging to each of the one or more simultaneous U-TCI-TRP-update lists is performed simultaneously.

16. The method according to claim 10, wherein when the one or more TRPs include a first TRP and a second TRP, the TCI state activation/deactivation MAC CE includes a downlink (DL) bandwidth part (BWP) 1 field indicating a first DL BWP for the first TRP, an uplink (UL) BWP 1 field indicating a first UL BWP for the first TRP, a DL BWP 2 field indicating a second DL BWP for the second TRP, and a UL BWP 2 field indicating a second UL BWP for the second TRP.

17. The method according to claim 10, wherein when the one or more TRPs include a first TRP and a second TRP, the TCI state activation/deactivation MAC CE includes a DL BWP field indicating a DL BWP for the first TRP and the second TRP, and a UL BWP field indicating a UL BWP for the first TRP and the second TRP.

18. A user equipment (UE) comprising: at least one processor, wherein the at least one processor causes the UE to perform:
receiving a transmission configuration indicator (TCI) state activation/deactivation medium access control (MAC) control element (CE) from a base station, the TCI state activation/deactivation MAC CE indicating activation or deactivation of TCI state(s);
identifying one or more transmission and reception points (TRPs) indicated by a TRP indication field included in the TCI state activation/deactivation MAC CE;
identifying one or more TCI state indexes (IDs) associated with the one or more TRPs, based on TCI state ID fields included in the TCI state activation/deactivation MAC CE; and
activating or deactivating one or more TCI states having the one or more TCI state IDs.

19. The UE according to claim 18, wherein the at least one processor further causes the UE to perform: receiving information indicating a TCI state type of the serving cell from the base station,
wherein the TCI state type is indicated as a joint TCI state type or a separate TCI state type, the TCI state type of the serving cell is applied to the one or more TRPs associated with the serving cell, and the serving cell is indicated by a serving cell identifier (ID) field included in the TCI state activation/deactivation MAC CE.

20. The UE according to claim 18, wherein the at least one processor further causes the UE to perform: receiving one or more simultaneous unified (U)-TCI-TRP-update lists from the base station,
wherein activation or deactivation of TCI states for TRPs belonging to each of the one or more simultaneous U-TCI-TRP-update lists is performed simultaneously.
